# EUROPEAN PATENT APPLICATION

(11) **EP 4 813 843 A1**
(43) Date of publication of application: **30.09.2026**
(21) Application number: 26165571.6
(22) Date of filing: 17.03.2026
(51) Int. Cl.: B64D 41/00

(54) **AIRCRAFT RAM AIR TURBINE SYSTEMS HAVING FACE GEARS**

(30) Priority: 25.03.2025 US 202519089999
(71) Applicant: The Boeing Company, Arlington, VA 22202 (US)
(72) Inventor: CHUN, Hon-Wai William, Arlington, 22202 (US); SHILL, Caleb Richard, Arlington, 22202 (US); CRAIG, Gary Alan, Arlington, 22202 (US)
(74) Representative: Bryn-Jacobsen, Caelia

(57) **Abstract**

Example ram-air turbine (RAT) systems for aircraft are disclosed herein. An example RAT system includes a fan (106); a fan output shaft (218) coupled to the fan (106); a first face gear (206, 402) operatively coupled to the fan output shaft; a second face gear (208, 404); and a first pinion gear (210, 406) enmeshed with the first face gear and the second face gear.

## Description

### FIELD OF THE DISCLOSURE

This disclosure relates generally to propulsion systems and, more particularly, to aircraft ram air turbine systems having face gears.

### BACKGROUND

Aircraft employ ram air turbine (RAT) systems for generating power. In some examples, RAT systems provide an emergency power source during a failure of a main power system. The RAT recovery system is movable between a stored position and a deployed position relative to the fuselage. A RAT system can include a gearing system that connects between a fan and a power generator. Power is generated as the fan is placed through air current during flight.

### SUMMARY

An example ram air turbine (RAT) system includes a fan, a fan output shaft coupled to the fan, a first face gear, the first face gear operatively coupled to the fan output shaft, a second face gear, and a first pinion gear enmeshed with the first face gear and the second face gear.

In another example, a RAT transmission disclosed herein includes a transmission casing having a cavity containing: a first face gear; a second face gear; and a pinion gear to couple the first face gear and the second face gear, the first face gear to receive an input from a RAT fan, the pinion gear to output a rotational movement provided by the RAT fan to a generator shaft of a generator via the first face gear and the second face gear.

In yet another example, an aircraft disclosed herein includes a fuselage and a RAT recovery system coupled to the fuselage. The RAT recovery system is movable between a stored position and a deployed position relative to the fuselage. The RAT recovery system including: a fan; a first face gear coupled to the fan, the first face gear having a first set of teeth; a second face gear having a second set of teeth oriented toward the first set of teeth of the first face gear; a first pinion gear enmeshed with the first set of teeth of the first face gear and the second set of teeth of the second face gear; and a generator having a generator input shaft operatively coupled to the first pinion gear.

### BRIEF DESCRIPTION OF THE DRAWINGS

FIG. 1 is a perspective view of an example aircraft including an example RAT system in accordance with teachings of this disclosure.
FIG. 2 is cross-sectional schematic view of the example RAT system of FIG. 1.
FIG. 3 is a perspective view of another example RAT system having another example transmission system disclosed herein.
FIG. 4 is perspective, schematic view of another example transmission system disclosed herein.
FIG. 5 is cross-sectional schematic view of another example RAT system disclosed herein including the example transmission system of FIG. 4.

In general, the same reference numbers will be used throughout the drawing(s) and accompanying written description to refer to the same or like parts. The figures are not necessarily to scale.

### DETAILED DESCRIPTION

Aircraft employ RAT systems to generate power, cool aircraft systems or components, and/or provide power to high-powered electronics. For example, RAT systems include a turbine (e.g., a wind turbine) that can be used to generate power from an airstream during flight by ram pressure due to a speed of an aircraft. The generated power can be used to operate essential systems including, for example, flight controls, hydraulics, and/or other instrumentation when primary and auxiliary power systems fail or do not provide a sufficient amount of power. In some examples, RAT systems are coupled to hydraulic pumps that power electrical generators. Thus, even if the main engines and auxiliary power units are offline, an aircraft can maintain control and communication. In some examples RAT systems are employed with miliary aircraft to power high-powered electronics, such as jamming system, without relying on a main power supply of the aircraft.

Example RAT systems disclosed herein employ one or more face gear sets to improve power density of RAT systems compared to conventional gear sets (e.g., bevel gear sets, helical gear sets, spur gear sets, and/or any other non-face gear set(s)). Specifically, example RAT systems disclosed herein employ a face gear that connects or couples to a ram air fan (e.g., a single ram air fan) and a mating straddle mounted output pinion to drive a generator (e.g., an electrical generator). A higher gear ratio can be provided by a face gear set compared to conventional bevel and/or helical gear sets. Such a higher gear ratio face gear operates or drives the generator at a higher speed, improving the power density characteristic of the generator. Further, for the same output speed and torque available to the generator, a smaller input torque through the RAT air fan is needed with a face gear set compared to a conventional gear set. Hence, the RAT air fan can be reduced in size and/or weight. For example, a face gear set can have a nominal gear ratio of up to 12, which is higher than conventional gear sets (e.g., helical gear sets have a nominal gear ratio of up to 10 and bevel gear sets have a nominal gear ratio of up to 8). Thus, in order to match the gear ratio of a single gear set to achieve the same input/output speed ratio, two gear stages are required using conventional gear sets (e.g., non-face gear sets, bevel gear sets, helical gear sets, etc.). Therefore, a face gear set disclosed herein provides a greater power density output than those of conventional gear sets. As a result, employing example gear sets disclosed herein improves power density of a RAT power recovery system. Additionally, a RAT fan can be provided with a smaller diameter, thereby improving a packaging and/or envelope of the RAT system.

In some examples, an increased gear ratio of a face gear set can be provided by increasing a gear tooth count or reducing a pinion tooth count. Reducing the pinion tooth count is more advantageous for producing more power from the generator due to a higher shaft speed. The face gear set, in some examples, can achieve more than 2 times the gear ratio as conventional gears (e.g., bevel gears, helical gears, etc.). Hence, for the same input speed from a ram air fan, generator speed can be doubled using a face gear set. In some examples, where generator speed is fixed, a high gear ratio face gear set is advantageous because the input speed from the RAT air fan can be reduced, resulting in a reduction of a diameter and/or fan weight. In some examples, other accessory components of an aircraft can be driven by a face gear and can be arranged with a combination of a second face gear set and/or conventional spur and/or helical gear sets to achieve an optimal operating speed for the accessories.

In some examples, a first face gear (FG) ram air turbine (RAT) transmission as a first example includes a fan, a fan output shaft coupled to the fan, a face gear (FG) coupled to the fan output shaft, and a pinion gear enmeshed with the face gear. A power generator is operatively coupled to the pinion gear. The face gear receives power input from the fan and provides rotational movement to the generator via the pinion gear and the coupled generator shaft.

In another example, a second face gear (FG) ram air turbine (RAT) transmission includes a fan, a fan output shaft coupled to the fan, a first face gear coupled to the fan output shaft, a second face gear, and a pinion gear enmeshed with the face gear and the second face gear. An internal gear is integrated in the second face gear, and accessory gears are enmeshed with the internal gear. Hydraulic and lubrication pumps are operatively coupled to the accessory gears.

In another example, a second face gear that has the same tooth count as the first face gear is included in a FG RAT transmission. One or more pinion gears to couple to generators can be included. The pinion gears enmesh with both face gears. In some examples, idler gears that enmesh both face gears are included. Power is distributed from the first face gear to the pinion and idler gears. Power that distributed to the idler gears is combined at the second face gear and redistributed to the pinion gears. An output shaft that is coupled between the second face gear and an accessory output gear is included to provide power to the accessory components. A second equal-sized (i.e., same diametrical pitch and tooth count) face gear is provided to incorporate a torque spit feature to further improve a face gear RAT gearbox power density. If a second equal-sized face gear is used, idler gears can be employed to enable torque split configuration or feature. Power is transmitted from a fan to a first face gear. As a result, fifty percent (50%) of the fan power is distributed among the number of pinion gear-to-first face gear meshes, and the other fifty percent (50%) of the fan power is distributed among the idler gear-to-first face gear meshes. The second face gear combines the power transfers from the idler gears and distributes the power to the pinion gears evenly or equally. Hence, combining the power transfers from the first and second face gears, the total power to pinion gears substantially equals the power input from the fan (e.g., minus any miniscule loss due to, for example, friction).

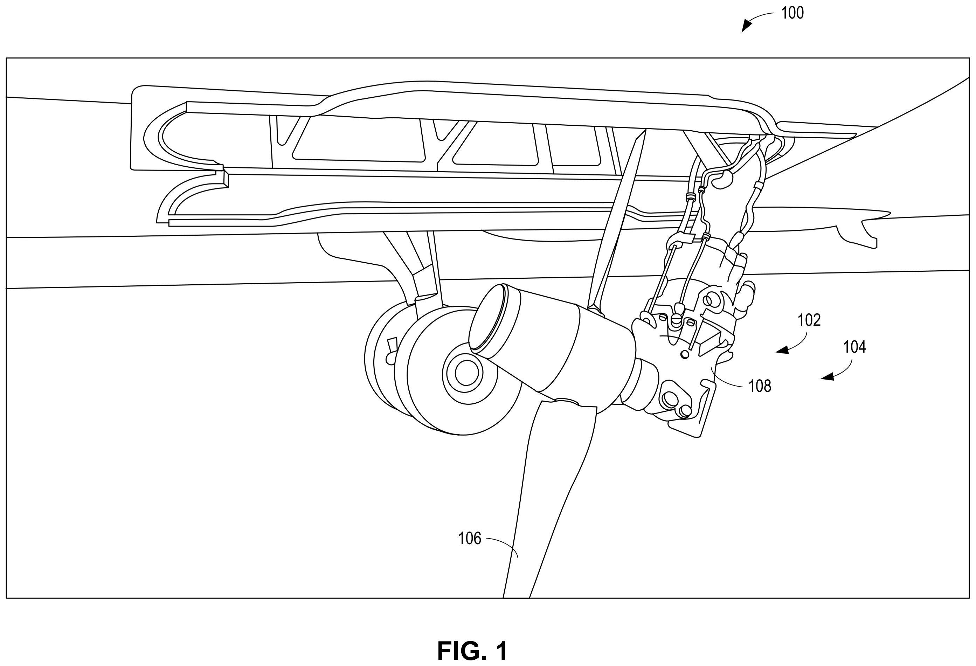

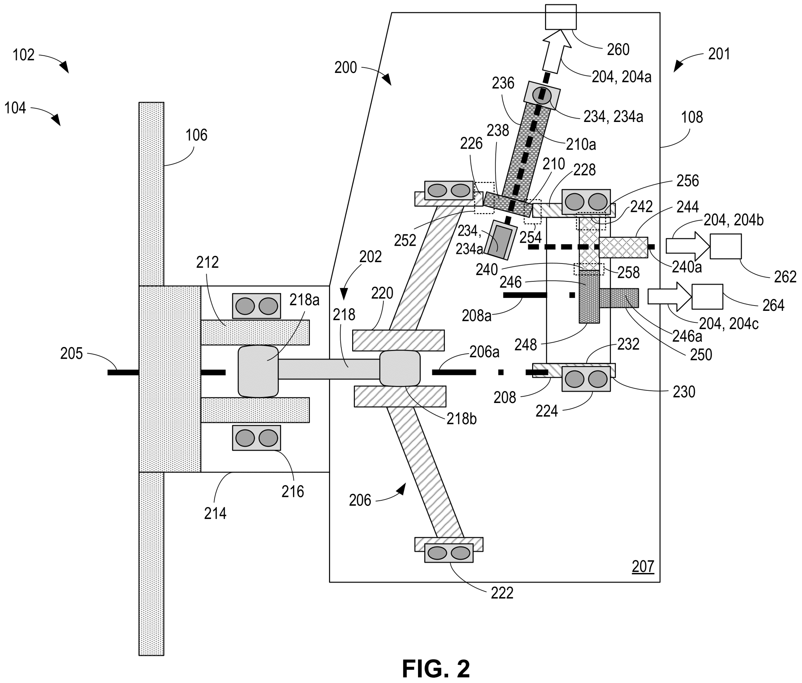

FIG. 1 is a perspective, partial view of an example aircraft 100 including an example ram air turbine (RAT) system 102 implemented in accordance with teachings of this disclosure. The RAT system 102 of the illustrated example is in a deployed position 104. The RAT system 102 includes a fan 106 coupled to a housing or transmission casing 108. In the deployed position 104, freestream airflow causes the fan 106 of the RAT system 102 to rotate, where rotation of the fan 106 causes a transmission assembly (e.g., a transmission system 200 of FIG. 2) housed within the transmission casing 108 to operatively couple the fan 106 and one or more aircraft accessories of the aircraft 100. For example, the RAT system 102 of the illustrated example generates electrical power. For example, the fan 106 is operatively coupled to a generator to generate electricity via the transmission assembly. In some examples, the RAT system 102 provides power input to one or more accessories of the aircraft 100. For example, the RAT system 102 can power one or more hydraulic pumps that operate control surfaces of the aircraft 100 (e.g., flaps, alerions, etc.), a re-circulating pump that provides oil to various components of the aircraft (e.g., engine components, bearings, lubrication for the RAT gearbox, etc.), a radar jamming system, and/or any other accessories of the aircraft 100. Although the example aircraft 100 of FIG. 1 is a commercial aircraft, the RAT system 102 disclosed herein can be employed with any other aircraft including, for example, military aircraft, unmanned vehicles or aircraft, and/or any other type of aircraft.

FIG. 2 is a cross-sectional, schematic illustration of the example RAT system 102 of FIG. 1. The RAT system 102 of the illustrated example includes an example transmission system 200 in accordance with teachings disclosed herein. The transmission system 200 of the illustrated example includes a gearbox or gear train assembly. For example, the transmission system 200 of the illustrated example includes an input 202 and one or more outputs 204. Specifically, the input 202 receives power from the fan 106 when the RAT system 102 is in the deployed position 104 and the freestream airflow causes the fan 106 to rotate about a fan rotational axis 205 of the fan 106. The one or more outputs 204 transfer power provided to the input 202 from the fan 106 to respective one or more accessories (e.g., a generator, a re-circulating pump, a hydraulic pump, a radar jamming system, and/or any other accessory) of the aircraft 100 via an output gear train assembly 201. The fan 106 is operatively coupled to the transmission casing 108 (e.g., a housing). The transmission casing 108 defining a cavity 207 to receive one or more gears of the transmission system 200 (e.g., a gear box).

To transfer power (torque and speed) from the fan 106 to the one or more outputs 204, the transmission system 200 of the illustrated example includes a first face gear 206, a second face gear 208 and a first pinion gear 210. In this example, the face gears 206 and 208 have the same diametrical pitch but do not have the same tooth count. Thus, power to the pinion gear 210 mesh equals power input (from the fan 106) divided by the number of pinion gears 210. Specifically, the RAT system 102 of the illustrated example includes a fan hub 212 coupled to the fan 106. The fan 106 is rotatably coupled to a fan housing 214 via a first bearing 216. Specifically, the fan 106 is operatively coupled to the first face gear 206. For example, the fan 106 is operatively coupled to the first face gear 206 via a quill shaft 218. A first end 218a of the quill shaft 218 is coupled to the fan hub 212 of the fan 106 and a second end 218b of the quill shaft 218 is coupled to a first hub 220 of the first face gear 206 to transmit rotational motion, speed and torque from the fan 106 to the first face gear 206. In other words, the first face gear 206 rotates with rotation of the fan 106. Thus, the first face gear 206 receives an input (e.g., a rotational speed and torque) from the fan 106 via the quill shaft 218. In some examples, one or more gears and/or a gearbox can be interposed between the fan 106 and the first face gear 206. In some examples, the first face gear 206 can be coupled to the fan 106 via a shaft and spline and/or flexible coupling connection (e.g., elastomeric, Collins, Thomas, etc., which can accommodate misalignment between hubs 212 and 220). In some examples, the fan 106 includes a fan output shaft that is coupled (e.g., directly, or indirectly) to (e.g., the first hub 220 of) the first face gear 206 (via a spline, elastomeric, flexible plate(s), and/or any other suitable connection).

The first face gear 206 is rotatably coupled to the transmission casing 108 via a second bearing 222. In other words, the first face gear 206 rotates relative to the transmission casing 108 about a first rotational axis 206a of the first face gear 206. In the illustrated example, the first rotational axis 206a is coaxially aligned with the fan rotational axis 205. However, in some examples, the first rotational axis 206a can be offset relative to the fan rotational axis 205. Additionally, the second face gear 208 is rotatably coupled to the transmission casing 108 via a third bearing 224. In other words, the second face gear 208 rotates relative to the transmission casing 108 about a second rotational axis 208a of the second face gear 208. In the illustrated example, the second rotational axis 208a of the second face gear 208 is non-collinear (e.g., is not coaxially aligned) relative to the first rotational axis 206a of the first face gear 206. In the illustrated example, the first face gear 206 has a first dimension (e.g., a first diameter) that is different (e.g., larger) than a second dimension (e.g., a diameter) of the second face gear 208. The first face gear 206 transfers an input from the fan 106 to the transmission system 200 (e.g., the pinion gear 210 and the second face gear 208) via a first set of gear teeth 226.

The second face gear 208 includes a second set of gear teeth 228. In the illustrated example, the diametrical pitch is the same but tooth counts are different between gear teeth 226 and 228. Additionally, the transmission system 200 of the illustrated example includes an internal ring gear 230. The internal ring gear 230 includes a third set of gear teeth 232. The internal ring gear 230 is operatively coupled to the second face gear 208. Thus, the second face gear 208 is coupled to the internal ring gear 230 such that rotation of the second face gear 208 causes rotation of the internal ring gear 230. For example, the internal ring gear 230 is fixed with the second face gear 208. In some examples, the second face gear 208 and the internal ring gear 230 are a unitary or single body. In some examples, the second face gear 208 and the internal ring gear 230 are separate parts that couple together via fasteners (e.g., bolts, etc.). In some examples, the second face gear 208 and the internal ring gear 230 can be separate components that can be coupled via a shaft, a gear, and/or any other connection(s). Thus, the internal ring gear 230 rotates about the second rotational axis 208a of the second face gear 208.

The pinion gear 210 of the illustrated example is rotatably coupled via a fourth bearing 234. The fourth or pinion bearing 234 of the illustrated example is a pinion duplex ball bearing 234a and a roller bearing 234b. The pinion bearing 234 facilitates smooth rotational movement by reducing friction between moving parts. The pinion bearing 234 includes an inner race, an outer race, rolling elements (which can be balls and/or rollers), and a cage that keeps the rolling elements evenly spaced about a circumference of the bearing. For the roller bearing 234b, the inner race can be the shaft outer diameter (namely the integral inner race). In Figure 2, the roller bearing 234b is positioned closer to the face gear axis 206a than the duplex ball bearing 234a. The ball-roller bearing mount configuration is a "straddled mounted" configuration. The fourth bearing 234 can handle both radial and axial loads, ensuring proper alignment and stability of the pinion shaft.

The pinion gear 210 includes a first output shaft 236 and a fourth set of gear teeth 238. The pinion gear 210 is coupled to (e.g., enmeshed with) the first face gear 206 and the second face gear 208. Specifically, the fourth set of gear teeth 238 of the pinion gear 210 enmesh with the first set of gear teeth 226 of the first face gear 206 and the second set of gear teeth 228 of the second face gear 208. In other words, the first pinion gear 210 is positioned between the first face gear 206 and the second face gear 208. The pinion gear 210 provides a first output 204a of the transmission system 200 (e.g., via the first output shaft 236).

The transmission system 200 of the illustrated example includes a first spur gear 240 coupled to (e.g., enmeshed with) the internal ring gear 230. The first spur gear includes 240 a fifth set of gear teeth 242 and a second output shaft 244. Specifically, the fifth set of gear teeth 242 of the first spur gear 240 enmesh with the third set of gear teeth 232 of the internal ring gear 230. Thus, an output of the second face gear 208 and/or the internal ring gear 230 provides an input to the first spur gear 240. For instance, rotation of the second face gear 208 and/or the internal ring gear 230 causes the first spur gear 240 to rotate about a third rotational axis 240a. In the illustrated example, the first spur gear 240 provides a second output 204b of the transmission system 200.

The transmission system 200 of the illustrated example includes a second spur gear 246. The second spur gear 246 includes a sixth set of gear teeth 248 and a third output shaft 250. The second spur gear 246 of the illustrated example is coupled to (e.g., enmeshed with) the first spur gear 240. For example, the sixth set of gear teeth 248 of the second spur gear 246 enmesh with the fifth set of gear teeth 242 of the first spur gear 240. Thus, rotation of the first spur gear 240 causes the second spur gear 246 to rotate about a rotational axis 246a. The second spur gear 246 provides a third output 204c of the transmission system 200.

Thus, the transmission system 200 of the illustrated includes an output gear train assembly 201 that includes the pinion gear 210, the second face gear 208, the internal ring gear 230, the first spur gear 240 and the second spur gear 246. In some examples, the output gear train assembly 201 can include only the pinion gear 210 and the second face gear 208. In some examples, the output gear train assembly 201 can include only the pinion gear 210, the second face gear 208, the internal ring gear 230, and the first spur gear 240.

In the illustrated example, the first face gear 206 and the first pinion gear 210 provide a first gear set 252 (or interface). The first gear set 252 of the illustrated example provides a first stage gear ratio of the transmission system 200. In the illustrated example, the first stage gear ratio is between approximately 7.25 and 7.75 (e.g., 7.50). The pinion gear 210 and the second face gear 208 provide a second gear set 254. The second gear set 254 defines a second stage gear ratio of the transmission system 200. In the illustrated example, the second stage gear ratio is approximately between 2.25 and 2.75 (e.g., 2.49). The first spur gear 240 and the internal ring gear 230 provide a third gear set 256. The third gear set 256 provides a third stage gear ratio of the transmission system 200. In the illustrated example, the third stage gear ratio is between approximately 2.0 and 2.5 (e.g., 2.20). Additionally, the second spur gear 246 and the first spur gear 240 provided a fourth gear set 258. The fourth gear set 258 of the illustrated example provide a fourth stage gear ratio of the transmission system 200. In the illustrated example, the fourth stage gear ratio is between approximately 1.0 and 1.25 (e.g., approximately 1.07).

The first output 204a provided by the pinion gear 210 of the illustrated example is operatively coupled to a first accessory 260 of the aircraft 100. In the illustrated example, the first accessory 260 is a generator. Specifically, the first output shaft 236 of the first pinion gear 210 is operatively coupled to a generator input shaft. For example, the first output shaft 236 of the first pinion gear 210 can be operatively coupled to the generator input shaft via a mechanical spline joint or via a mechanical keyed joint. A keyed joint refers to a mechanical connection that uses one or multiple keys to prevent relative rotation between two components. A key is inserted into a keyway/keyseat in the output/input shafts, allowing torque transmission.

In some examples, the first output shaft 236 of the first pinion gear 210 defines the generator input shaft and/or an input shaft of the first accessory 260. In some examples, the first output shaft 236 of the first pinion gear 210 is coupled (e.g., splined) with the generator input shaft and/or an input shaft of the first accessory 260. The first spur gear 240 is operatively coupled to a second accessory 262 of the aircraft 100. In the illustrated example, the second accessory 262 is a hydraulic pump for operating one or more control surfaces of the aircraft 100. For example, the second output shaft 244 of the first spur gear 240 can be operatively coupled to a second input shaft of the hydraulic pump and/or an input of the second accessory 262.

Additionally, the second spur gear 246 is coupled to a third accessory 264 of the aircraft 100. In the illustrated example, the third accessory 264 is a re-circulating pump for pumping lubricating oil to various components (e.g., engines, bearings, RAT 200 (e.g., the gears of the RAT 200) etc.) of the aircraft 100. For example, a third output shaft 250 of the second spur gear 246 can be operatively coupled to a third input shaft of the re-circulating pump and/or an input of the third accessory 264.

In operation, when the RAT system 102 of the illustrated example is in the deployed position 104, freestream air causes the fan 106 to rotate about the fan rotational axis 205, which causes the first face gear 206 to rotate about the first rotational axis 206a via the quill shaft 218. The first face gear 206 causes the pinion gear 210 to rotate about a central axis 210a of the pinion gear 210. The first output shaft 236 of the pinion gear 210 drives an input (e.g., an input shaft) of the first accessory 260 of the aircraft 100. Additionally, the pinion gear 210 causes the second face gear 208 to rotate about the second rotational axis 208a, which causes the internal ring gear 230 to rotate about the second rotational axis 208a of the second face gear 208. In turn, the internal ring gear 230 causes the first spur gear 240 to rotate about the third rotational axis 240a, which causes the second output shaft 244 of the first spur gear 240 to drive an input of the second accessory 262. Additionally, rotation of the first spur gear 240 causes the second spur gear 246 to rotate about the rotational axis 246a, which causes the third output shaft 250 to drive an input of the third accessory 264.

The transmission system 200 of the illustrated example is not limited to the configuration of FIG. 2. For example, the transmission system 200 of the illustrated example can be configured to provide any number of outputs 204 to drive a corresponding number of aircraft accessories. In some examples, the transmission system 200 of the illustrated example can provide a single output (e.g., the first output 204a) (i.e., excluding the internal ring gear 230, the first spur gear 240 and the second spur gear 246), or any number of outputs 204 needed to drive various accessories of the aircraft 100 (e.g., a generator, a hydraulic pump, a re-circulation pump, a jamming system, and/or any other system of an aircraft). The transmission system 200 of the illustrated example can include any number pinion gears 210 to provide a corresponding number of outputs 204 of the transmission system 200. In some examples, the second face gear 208 is removed and/or replaced by another type of gear (e.g., a spur gear, a follower gear, etc.). For example, a follower gear can be coupled to the pinion gear 210 in place of the second face gear 208.

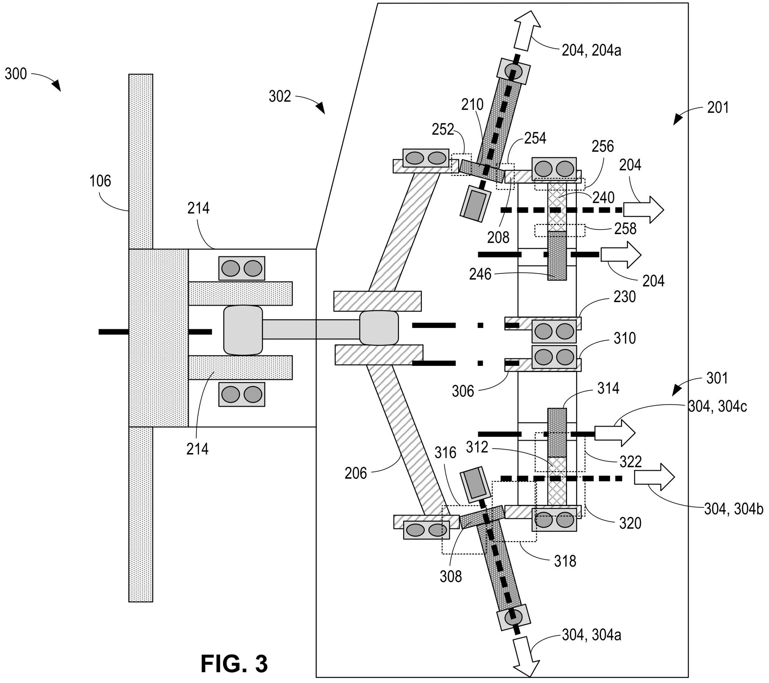

FIGS. 3-5 illustrate other example RAT systems 300, 500 that include other example transmission systems 302, 400 disclosed herein. Many of the components of the RAT systems 300, 500 and/or the transmission systems 302, 400 of FIGS. 3-5 are similar or identical to the components described above in connection with FIGS. 1-2. As such, those components will not be described in detail again below. Instead, the interested reader is referred to the above corresponding descriptions for a complete written description of the structure and operation of such components. To facilitate this process, similar or identical reference numbers will be used for like structures in FIGS. 3-5 as used in FIGS. 1-2. For example, the RAT systems 300, 500 and/or the transmission system 302, 400 of the illustrated example include the fan 106, the fan housing 214, the transmission casing 108, the quill shaft 218, the first bearing 216, the second bearing 222, etc.

FIG. 3 is a schematic side view illustration of another example RAT system 300 having another example transmission system 302 disclosed herein. The transmission system 302 of the illustrated example is similar to the transmission system 200 of FIGS. 1 and 2, except that the transmission system 302 includes additional outputs 304 in addition to the outputs 204 (e.g., the first output 204a, the second output 204b and the third output 204c). Specifically, the transmission system 302 includes an output gear train assembly 301 in addition to the output gear train assembly 201 of FIG. 2. The output gear train assembly 301 of the illustrated example is similar to the output gear train assembly 201 of FIG. 2. For example, the transmission system 302 of the illustrated example includes the first pinion gear 210, the second face gear 208, the internal ring gear 230, the first spur gear 240, and the second spur gear 246 (e.g., provided by the output gear train assembly 201). Additionally, to provide the additional outputs 304, the transmission system 302 of the illustrated example includes a third face gear 306, a second pinion gear 308, a second internal ring gear 310, a third spur gear 312 and a fourth spur gear 314 (e.g., provided by the output gear train assembly 301). The second pinion gear 308 is coupled to (e.g., enmeshes with) the first face gear 206 and the third face gear 306. Thus, the second pinion gear 308 drives the third face gear 306 and the second internal ring gear 310 via the first face gear 206. The third spur gear 312 is coupled to (e.g., enmeshed with) the second internal ring gear 310 and the fourth spur gear 314 is coupled with (e.g., enmeshed with) the third spur gear 312. The transmission system 302 of the illustrated example provides a fourth output 304a provided by the second pinion gear 308, a fifth output 304b provided by the third spur gear 312, and a sixth output 304c provided by the fourth spur gear 314.

In addition to the first gear set 252, the second gear set 254, the third gear set 256 and the fourth gear set 258 provided by the first face gear 206, the second face gear 208, the first pinion gear 210, the first spur gear 240 and the second spur gear 246, the first face gear 206 and the second pinion gear 308 provides a fifth gear set 316 providing a fifth stage gear ratio of the transmission system 302, the second pinion gear 308 and the third face gear 306 provide a sixth gear set 318 providing a sixth stage gear ratio of the transmission system 302, the second internal ring gear 310 and the fourth spur gear 312 provide a seventh gear set 320 providing a seventh stage gear ratio of the transmission system 302, and the fourth spur gear 314 and the third spur gear 312 provide an eighth gear set 322 providing an eighth stage gear ratio of the transmission system 302. In some examples, the one or more of the fifth stage gear ratio provided by the fifth gear set 316, the sixth stage gear ratio provided by the sixth gear set 318, the seventh stage gear ratio provided by the seventh gear set 320, and the eighth stage gear ratio provided by the eighth gear set 322 can be the same or different than corresponding ones of the first stage gear ratio provided by the first gear set 252, the second stage gear ratio provided by the second gear set 254, the third stage gear ratio provided by the third gear set 256 and the fourth stage gear ratio provided by the fourth gear set 258. Thus, in some examples, the second face gear 208 and the third face gear 306 are identical in size (e.g., have the same diameter, the same number of gear teeth, the same diametral). The first pinion gear 406 can have a different size (e.g., a diameter, number of gear teeth) than the second pinion gear 408. Diametral pitch, however, is same for all pinion gears, face gears and idlers. Hence, in the example of FIG. 2, where one of the pinion gear is smaller than the other, the diametral pitch is the same.

In some examples, the second pinion gear 308, the third face gear 306, the second internal ring gear 310, the third spur gear 312 and the fourth spur gear 314 can be the same (e.g., identical or mirror image configuration) compared to the first pinion gear 210, the second face gear 208, the first spur gear 240 and the second spur gear 246 assembly. In some examples, one or more of the second pinion gear 308, the third face gear 306, the second internal ring gear 310, the third spur gear 312 and/or the fourth spur gear 314 can be the different (e.g., different diameters, different tooth pitch, different number of gear teeth, etc.) compared to corresponding ones of the first pinion gear 210, the second face gear 208, the first spur gear 240 and the second spur gear 246.

The outputs 304a, 304b and 304c of the transmission system 302 can be coupled to one or more accessories of an aircraft. Thus, the example transmission system 302 of the illustrated example can provide power to at least six accessories of an aircraft. In some examples, the transmission system 302 can include a third pinion gear, a third face gear, a third internal ring gear, a fifth spur gear and a sixth spur gear to provide at least an additional three power outputs of the transmission system 302. Any number of output gear train assemblies (e.g., the output gear train assembly 201, the output gear train assembly 301) can be provided to the transmission system 302 and/or driven by the first face gear 206.

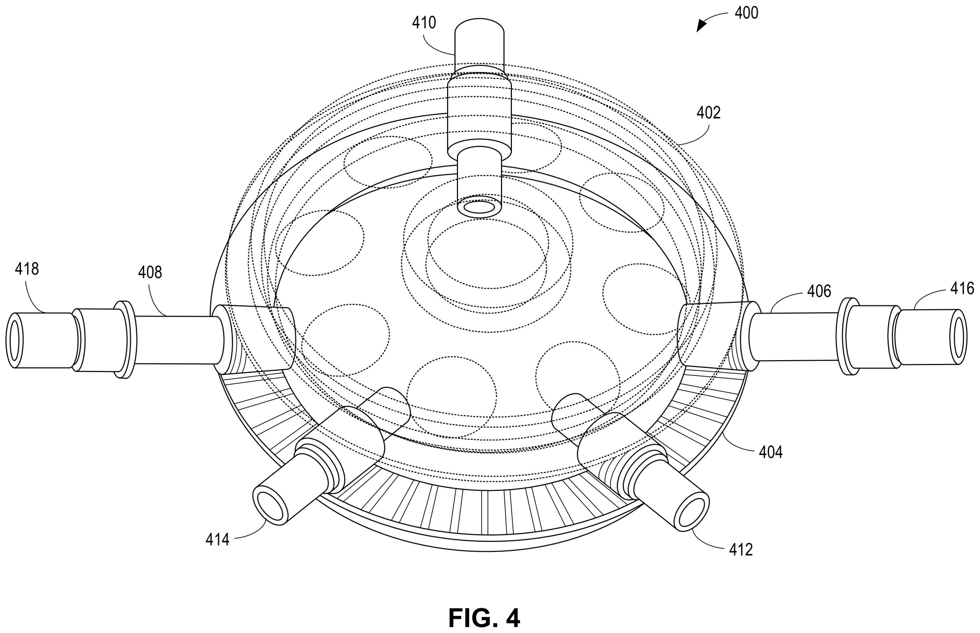

FIG. 4 is a perspective view of another example transmission system 400. The transmission system 400 of the illustrated example provides a split drive configuration (i.e., a split torque or split power configuration). The transmission system 302 of the illustrated example includes the first face gear 402, a second face gear 404, a first pinion gear 406, and a second pinion gear 408. Additionally, the transmission system 400 of the illustrated example can include one or more idler gears 410-414. Specifically, the transmission system 400 of the illustrated example includes a first idler gear 410, a second idler gear 412, and a third idler gear 414 coupled to (e.g., enmeshed with) the first face gear 402 and the second face gear 404. Thus, the first pinion gear 406, the second pinion gear 408, the first idler gear 410, the second idler gear 412, and the third idler gear 414 are positioned between the first face gear 402 and the second face gear 404.

Specifically, the first pinion gear 406 provides a first output 416 and the second pinion gear 408 provides a second output 418. The idler gears 410-414 of the illustrated example split a power input (e.g., a torque) between the first face gear 402 and the second face gear 404. Thus, the first face gear 402 and the second face gear 404 drive the first pinion gear 406 and the second pinion gear 408. The idler gears 410-414 recombine and/or redistribute the load (e.g., torque) between the second face gear 404 and the first face gear 402. By splitting the load distribution between the first face gear 402 and the second face gear 404 via the idler gears 410-414 to the first pinion gear 406 and the second pinion gear 408, the example transmission system 400 can be formed with a smaller overall dimensional profile or envelope.

For torque splitting between pinion gears, the first pinion gear 406 and the second pinion gear 408 of the illustrated example are identical in tooth size (same diameter, same tooth count and/or the same diametral pitch) and in length. However, in some examples, the first pinion 406 can have a length that is different than the second pinion gear 408. For non-torque splitting applications (e.g., the example of FIG. 2), in some examples, the first pinion gear 406 can have a different size (e.g., a diameter, number of gear teeth) than the second pinion gear 408. Diametral pitch, however, is same for all pinion gears, face gears and idlers. Hence, in the example of FIG. 2, where one of the pinion gear is smaller than the other, the diametral pitch is the same.

In some examples, the transmission system 400 can include only the first pinion gear 406 without the second pinion gear 408 and the third idler gear 414. In some examples, the transmission system 400 can include multiple pinion gears to provide a corresponding number of output(s) of the transmission system 400. The idler gears 410, 412 & 414 are subject to reverse gear tooth bending and, thus, can each manage approximately 70 percent of pinion gear load when the idlers 410, 412 & 414 are the same size as the pinion gears 406, 408. Thus, for a split torque configuration, the number of idler gears 410, 412 & 414 needed is based on a load (e.g., a maximum load) to be carried by the total power output of the transmission system 400 and the number of pinion gear used. For example, the transmission system 400 provides a power output of 200 horsepower (hp) at each of the two pinion gears 406, 408 (400 hp total). Power is distributed such that each pinion gear mesh 520 and 524 carries 100 hp, and the remaining 200 hp is shared by the number of idler gears 410, 412, 414. Since each idler 410-414 can manage 70% of pinion gear load. Thus, three idler gears are provided in the illustrated example. Power shared by the idler gears 410-414 transmits to the pinion gears 406, 408 (e.g., each of the pinion gears 406, 408 at 100 hp), via the second face gear 404. Thus, in the example where a total of 400 hp is provided, each pinion gear 406, 408 (e.g., input pinion) combines 100 hp from the first and second face gears 402, 404 and outputs 200 hp to respective ones of accessories (e.g., generators) 416, 418.

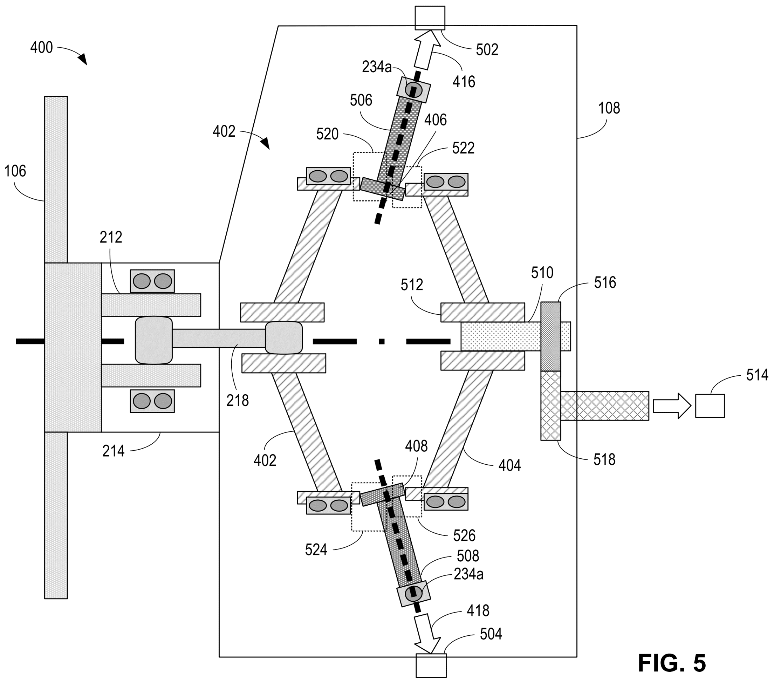

FIG. 5 is a side, cross-sectional schematic illustration of an example RAT system 500 disclosed herein implemented with the example transmission system 400 of FIG. 4. Similar to the RAT system 102, the fan 106 drives the first face gear 402 via the quill shaft 218. In turn, the first face gear 402 drives the idler gears 410-414 of FIG. 4. The idler gears 410-414 split the power input (e.g., the torque input, a rotational speed, etc.)) provided to the first face gear 402 between the first face gear 402 and the second face gear 404. In turn, the first face gear 402 and the second face gear 404 drive the first pinion gear 406 and the second pinion gear 408. In the illustrated example, the first pinion gear 210 is operatively coupled to a first accessory 502 of the aircraft (e.g., the aircraft 100) and the second pinion gear 408 is operatively coupled to a second accessory 504 of the aircraft. For example, a first output shaft 506 of the first pinion gear 406 is operatively coupled to (e.g., a first input of) the first accessory 502 of the aircraft and a second output shaft 508 of the second pinion gear 408 is operatively coupled to (e.g., a second input of) the second accessory 504 of the aircraft. Additionally, the third output shaft of the third idler and the fourth idler shaft of the fourth idler can be driven via rotation of the first face gear. The third output shaft of the third idler can be used to drive a third accessory of the aircraft and the fourth output shaft of the fourth idler can be used to drive a fourth accessory of the aircraft.

In the illustrated example, the second face gear 404 includes a third output shaft 510. For example, the third output shaft 510 can be coupled to a hub 512 of the second face gear 404 via, for example, a spline connection, a curvic coupling, elastomeric, key connection, etc.. In some examples, the third output shaft 510 can drive a third accessory 514 of the aircraft. In some examples, the third output shaft 510 can be directly coupled to an input of the third accessory 514. In the illustrated example, the third output shaft 510 includes an output gear 516 that can operatively couple to a secondary gear train 518 and/or gearbox operatively coupled to (e.g., an input of) the third accessory 514 of the aircraft. In some examples, the second face gear 404 includes an internal ring gear (e.g., similar to the internal ring gear 230 of FIG. 2) and one or more spur gears (e.g., the first spur gear 240, the second spur gear 246 of FIG. 2) instead of the hub 512. In some examples, the third output shaft 510 is omitted. The first accessory 502, the second accessory 504 and/or the third accessory 514 can be a hydraulic pump, a re-circulation pump, a jamming system, and/or any other system of an aircraft.

In the illustrated example, the first face gear 402 and the first pinion gear 406 provide a first gear set 520 that defines a first gear stage of the transmission system 400. The first pinion gear 406 and the second face gear 404 provide a second gear set 522 that defines a second gear stage of the transmission system 400. In the illustrated example, the first face gear 402 and the second pinion gear 408 provide a third gear set 524 that defines a third gear stage of the transmission system 200. The second pinion gear 408 and the second face gear 404 provide a fourth gear set 526 that defines a fourth gear stage of the transmission system 200.

Additionally, the first face gear 402 has a first diameter and the second face gear 404 has a second diameter. In the illustrated example, the first diameter is similar to the second diameter (e.g., relative diameters of the face gears 402, 404 depend on the pinion gear shaft angle (i.e., orientation of rotational axis relative to the face gear rotational axis)). In some examples, the first diameter is different (e.g., not equal to or larger than) the second diameter (e.g., by a dimension that is greater than 10 percent of the first diameter).

To provide or achieve power distribution or torque split, the pinion gears 408, 406 each include the duplex ball bearing 234a, but do not include the roller bearing 234b (e.g., nose roller bearing). Removing the roller bearing (e.g., the roller bearing 234b of FIG. 2) enables the pinion gears 404, 406 to flex so that their respective positions can self-adjust for load-balance between the opposing pinion gear-to-face gear meshes. For example, a straddle mounting pinion gear can be too stiff and/or may not be able to move for a load-balance position, resulting in an uneven load share between the face gear-to-pinion gear meshes. If a torque split configuration is not needed or desired, then the pinion gears include the duplex ball bearings 234a and nose roller bearings (e.g., the nose roller bearings 234b of FIG. 2). Additionally, although not shown, the idler gears 410-414 include the duplex ball bearings (e.g., the duplex ball bearings 234a of FIG. 2) and nose roller bearings (e.g., the nose roller bearings 234b of FIG.2).

In operation, the first face gear 402 receives an input from the fan 106. In turn, the first face gear 402 rotates the idler gears 410-414 and the pinion gears 406, 408 (e.g., output pinions). Specifically, the first face gear 402 splits the load (e.g., torque) between the pinion gears 406, 408 and the idler gears 410-414 (FIG. 4). In turn, the idler gears 410-414 transfer the load to the second face gear 404 and the second face gear 404 transfers its load (e.g., a split load, or half of a total load) to the first pinion gear 406 and the second pinion gear 408. Thus, the first face gear 402 and the second face gear 404 drive the first pinion gear 406 and the second pinion gear 408. The first output shaft 506 of the first pinion gear 406 drives the first accessory 502 and the second output shaft 508 of the second pinion gear 408 drives the second accessory 504. Additionally, rotation of the second face gear 404 causes the third output shaft 510 to drive the third accessory 514.

In the illustrated example of FIGS. 4 and 5, the second face gear 404 has the same tooth count and tooth pitch as the first face gear 402. A second face gear 404 that has the same diametral pitch and tooth count is provided to incorporate a torque spit feature to further improve a power density of the RAT system 500. When a second equal-pitch, equal/similar-tooth count face gear 404 is used with the first face gear 402, the idler gears 410-414 can be employed to enable torque split configuration or feature. Power is transmitted from the fan 106 to the first face gear 402. The power is distributed from the first face gear 402 to the pinion gears 406, 408 and the idler gears 410-414. For example, power that is distributed to the idler gears 410-414 is combined at the second face gear 404 and redistributed to the pinion gears 406, 408. As a result, fifty percent (50%) of the fan power is distributed among the number of pinion gear-to-first face gear meshes, and the other fifty percent (50%) of the fan power is distributed among the idler gear-to-first face gear meshes. The second face gear 404 combines the power transfers from the idler gears 410-414 and distributes the power to the pinion gears 406, 408 evenly or equally between the pinion gears 406, 408. Hence, combining the power transfers from the first and second face gears 402, 404, the total power to the pinion gears 406, 408 substantially equals the power input from the fan 106 (e.g., minus any miniscule loss due to, for example, friction).

The foregoing examples of the RAT systems 102, 300, 500, the transmission systems 200, 302, 400 and/or other components (e.g., the face gears, the pinion gears, the spur gears, the idler gears, etc.) disclosed herein can be employed with an aircraft. Although each example of the RAT systems 102, 300, 500, the transmission systems 200, 302, 400 and/or other components (e.g., the face gears, the pinion gears, the spur gears, the idler gears, etc.) disclosed herein have certain features, it should be understood that it is not necessary for a particular feature of one example to be used exclusively with that example. Instead, any of the features described above and/or depicted in the drawings can be combined with any of the examples, in addition to or in substitution for any of the other features of those examples. One example's features are not mutually exclusive to another example's features. Instead, the scope of this disclosure encompasses any combination of any of the features.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

Example methods, apparatus, systems, and articles of manufacture to provide ram air turbine systems are disclosed herein. Further examples and combinations thereof include the following:
Example 1 includes a ram air turbine (RAT) system having a fan, a fan output shaft driven by the fan, a first face gear, the first face gear operatively coupled to the fan output shaft coupled to fan, a second face gear, and a first pinion gear enmeshed with the first face gear and the second face gear.
Example 2 includes the RAT system of example 1, wherein the first face gear and the first pinion gear provide a first gear set.
Example 3 includes the RAT system of example 2, wherein the first gear set provides a first stage gear ratio of approximately 7.50.
Example 4 includes the RAT system of any one of examples 1-3, wherein the first pinion gear and the second face gear provide a second gear set.
Example 5 includes the RAT system of example 4, wherein the second gear set provides a second stage gear ratio of approximately 2.46.
Example 6 includes the RAT system of any one of examples 1-5, further including a first spur gear enmeshed with the second face gear, the first spur gear to provide a second output.
Example 7 includes the RAT system of any one of examples 1-6, wherein the first spur gear and the second face gear provide a third gear set.
Example 8 includes the RAT system of any one of examples 1-7, wherein the third gear set provides a third stage gear ratio of approximately 2.20.
Example 9 includes the RAT system of any one of examples 1-8, further including a second spur gear enmeshed with the second face gear, the second spur gear to provide a third output.
Example 10 includes the RAT system of any one of examples 1-9, wherein the second spur gear and the second face gear provided a fourth gear set.
Example 11 includes the RAT system of any one of examples 1-10, wherein the fourth gear set provides a fourth stage gear ratio of approximately 1.07.
Example 12 includes a ram air turbine (RAT) transmission having a transmission casing having a cavity containing: a first face gear; a second face gear; and a pinion gear to couple the first face gear and the second face gear, the first face gear to receive an input from a RAT fan, the pinion gear to output a rotational movement provided by the RAT fan to a generator shaft of a generator via the first face gear and the second face gear.
Example 13 includes the RAT system of example 12, further including one or more secondary gears operatively coupled with the second face gear.
Example 14 includes the RAT system of any one of examples 12-13, wherein the pinion gear transfers the input from the first face gear to the second face gear, and the second face gear to provide a second input to the one or more secondary gears.
Example 15 includes the RAT system of any one of examples 12-14, further including an internal ring gear coupled to the second face gear, the internal ring gear to transfer an input from the second face gear to the secondary gears.
Example 16 includes an aircraft having a fuselage and a RAT recovery system coupled to the fuselage. The RAT recovery system is movable between a stored position and a deployed position relative to the fuselage. The RAT recovery system including: a fan; a first face gear coupled to the fan, the first face gear having a first set of teeth; a second face gear having a second set of teeth oriented toward the first set of teeth of the first face gear; a first pinion gear enmeshed with the first set of teeth of the first face gear and the second set of teeth of the second face gear; and a generator having a generator input shaft operatively coupled to the first pinion gear.
Example 17 includes the aircraft of example 16, wherein the first pinion gear is to transfer an input force from the first face gear that is provided by the fan to the generator input shaft.
Example 18 includes the aircraft of any one of examples 16-17, further including a second pinion gear enmeshed with the first face gear and the second face gear, the second pinion gear provides a second output to drive an accessory of the aircraft.
Example 19 includes the aircraft of any one of examples 16-19, further including an internal ring gear coupled to the second face gear and a first spur gear enmeshed with the internal ring gear, the first spur gear operatively coupled to a hydraulic pump of the aircraft, the first spur gear to drive the hydraulic pump.
Example 20 includes the aircraft of example 19, further including a second spur gear enmeshed with the first spur gear, the second spur gear operatively coupled to a re-circulating pump of the aircraft, the second spur gear to drive the re-circulating pump.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A ram air turbine (RAT) system (102, 500) comprising:
a fan (106);
a fan output shaft coupled to the fan (106);
a first face gear (206, 402), the first face gear operatively coupled to the fan output shaft;
a second face gear (208, 404); and
a first pinion gear (210, 406) enmeshed with the first face gear and the second face gear.

2. The RAT system of claim 1, wherein the first face gear and the first pinion gear provide a first gear set (258, 526); and optionally
wherein the first gear set provides a first stage gear ratio of approximately 7.50.

3. The RAT system of claim 1, wherein the first pinion gear and the second face gear provide a second gear set (254, 522); and optionally
wherein the second gear set provides a second stage gear ratio of approximately 2.46.

4. The RAT system of any one of the preceding claims, further including a first spur gear (240) enmeshed with the second face gear, the first spur gear to provide a second output (204b, 418).

5. The RAT system of any one of the preceding claims, wherein the first spur gear and the second face gear provide a third gear set (256, 524); and optionally
wherein the third gear set provides a third stage gear (256, 524) ratio of approximately 2.20.

6. The RAT system of any one of the preceding claims, further including a second spur gear (246) enmeshed with the second face gear, the second spur gear to provide a third output (204c).

7. The RAT system of claim 6, wherein the second spur gear and the second face gear provided a fourth gear set (258, 526); and optionally
wherein the fourth gear set provides a fourth stage gear ratio of approximately 1.07.

8. A RAT transmission comprising:
a transmission casing (108) having a cavity containing:
a first face gear (206, 402);
a second face gear (208, 404); and
a pinion gear (210, 406, 408) to couple the first face gear and the second face gear, the first face gear to receive an input (202) from a RAT fan (106), the pinion gear to output a rotational movement provided by the RAT fan to a generator shaft (201) of a generator (260) via the first face gear and the second face gear.

9. The RAT transmission of claim 8, further including one or more secondary gears (254, 522) operatively coupled with the second face gear; and optionally
wherein the pinion gear transfers the input from the first face gear to the second face gear, and the second face gear to provide a second input to the one or more secondary gears.

10. The RAT transmission of claim any one of claims 8-9, further including an internal ring gear coupled to the second face gear, the internal ring gear to transfer an input from the second face gear to the secondary gears.

11. An aircraft (100) comprising:
a fuselage (100);
the RAT recovery system (102, 500) of claim 1 coupled to the fuselage, the RAT system (102, 500) movable between a stored position and a deployed position relative to the fuselage, in which the first face gear has a first set of teeth (226);
the second face gear (208, 404) has a second set of teeth (228) oriented toward the first set of teeth of the first face gear;
the first pinion gear (210, 406, 408) is enmeshed with the first set of teeth of the first face gear and the second set of teeth of the second face gear; and the RAT system further comprising
a generator (260) having a generator input shaft (201, 416, 418) operatively coupled to the first pinion gear.

12. The aircraft of claim 11, wherein the first pinion gear is to transfer an input force from the first face gear that is provided by the fan to the generator input shaft.

13. The aircraft of claim 12, further including a second pinion gear (308, 408) enmeshed with the first face gear and the second face gear, the second pinion gear provides a second output (204) to drive an accessory (260, 416, 418) of the aircraft.

14. The aircraft of any one of claims 11-13, further including an internal ring gear (230) coupled to the second face gear and a first spur gear (240) enmeshed with the internal ring gear, the first spur gear operatively coupled to a hydraulic pump of the aircraft, the first spur gear to drive the hydraulic pump.

15. The aircraft of claim 14, further including a second spur gear (246) enmeshed with the first spur gear, the second spur gear operatively coupled to a re-circulating pump (264) of the aircraft, the second spur gear to drive the re-circulating pump.
